# EUROPÄISCHE PATENTANMELDUNG

(11) **EP 2 047 913 A1**
(43) Veröffentlichungstag der Anmeldung: **15.04.2009**
(21) Anmeldenummer: 08020317.7
(22) Anmeldetag: 15.06.2004
(51) Int. Cl.: B05B 13/00, B05B 15/12

(54) **Vorrichtung zum Lackieren und Trocknen von Fahrzeugen und Fahrzeugteilen**

(30) Priorität: 17.06.2003 DE 20309327 U
(62) Teilanmeldung aus: 04013993.3
(71) Anmelder: Wolf Verwaltungs GmbH & Co. KG, 85290 Geisenfeld (DE)
(72) Erfinder: Richtsfeld, Viktor, 84048 Mainburg (DE); Lindinger, Kurt, 85290 Geisenfeld (DE); Weber, Sebastian, 85290 Geisenfeld (DE); Obster, Erich, 85104 Pförring (DE); Schiemer, Jürgen (FH), Dipl.-Ing., 85051 Ingolstadt (DE); Dobler, Alois, 84048 Mainburg (DE)
(74) Vertreter: Meyer, Thorsten

(57) **Zusammenfassung**

Es wird eine Lackier- und Trocknungsanlage für Fahrzeuge vorgeschlagen, bei der die Abblaseinrichtung statt mit Druckluft mit einem Teilvolumen der Prozessluft arbeitet, die erwärmt und mit hoher Geschwindigkeit aus dem zwischen Filterdecke ud Beleuchtung angeordnetem Düsensystem von oben nach unten durch den Lackier- und Trocknungsraum geblasen wird. Die Düsen sind in der Kabinenwand versenkt angeordnet und der aus den Düsen austretende Luftstrom ist in seiner Strahlrichtung individuell einstellbar. Die Luft in der Kabine wird verwirbelt und bei gleichzeitiger Erwärmung die relative Luftfeuchtigkeit reduziert. Damit wird ein schnelleres Ausdunsten des Wassers aus Lacken, insbesondere Wasserlacken erreicht, wodurch ein Ablüften mit der mehrfachen Geschwindigkeit erzielt werden kann. Des weiteren wird mit der Erfindung eine besonders einfache Bedienung mit Hilfe eines Bedienpanels erreicht.

## Beschreibung

Die Erfindung betrifft eine Vorrichtung nach dem Oberbegriff des Anspruches 1.

Ziel der Erfindung ist, herkömmliche Lackier- und Trocknungskabinen durch moderne Technologie zu verbessern, optimale Lackierergebnisse zu erzielen, den Energieverbrauch zu reduzieren, und die Anlage möglichst bedienungsfreundlich zu gestalten.

Gemäß der Erfindung wird dies mit den Merkmalen des Kennzeichens des Anspruches 1 erreicht. Weitere Ausgestaltungen der Erfindung sind Gegenstand der Unteransprüche.

Die erfindungsgemäße Abblaseinrichtung arbeitet statt mit Druckluft mit einem Teilvolumen der Prozessluft, die erwärmt wird und mit hoher Geschwindigkeit aus dem zwischen Filterdecke und Beleuchtung angeordneten und eine kompakte Einheit bildenden System von Düsen von oben nach unten durch den Lackier- und Trocknungsraum geblasen wird. Die Düsen sind in der Kabinenwand versenkt angeordnet und der aus den Düsen austretende Luftstrom ist in seiner Strahlrichtung individuell einstellbar. Mit dieser Einrichtung wird die Luft in der Kabine verwirbelt, bei gleichzeitiger Erwärmung wird die relative Luftfeuchtigkeit reduziert und damit wird ein schnelleres Ausdunsten des Wassers aus Lacken, insbesondere Wasserlacken bzw. Lösungsmitteln erreicht. Damit werden Teile des Fahrzeuges, die eine relativ lange Ablüftzeit benötigen, um ein Mehrfaches schneller abgelüftet. Im Gegensatz zu Geräten, die frei im Lackierraum angeordnet sind, ist die Gefahr von Verschmutzungen sehr gering und die Reinigung kann problemlos durchgeführt werden.

Eine derartige erfindungsgemäße Abblaseinrichtung "Multi-Air" ist dadurch besonders einfach bedienbar ausgebildet, dass an der Außenseite der Kabine zur Steuerung der Anlage ein Bedienpanel vorgesehen ist, an dem alle Funktionen bzw. Betriebsarten der Kabine wie Energiesparen, Reinigen, Lackieren, Ablüften, Trocknen, Abkühlen über Bedientasten an dem Bedienpanel übersichtlich und leicht verständlich zusammengefasst und mit Hilfe von Berührschaltem (Touch-Screen) anwählbar sind, so dass beim Antippen der jeweiligen Taste die entsprechend gewählte Betriebsart vollautomatisch abläuft. Bei den Betriebsarten "Reinigen, Ablüften, Trocknen und Abkühlen" von Teilen und ganzen Fahrzeugen wird der Ablauf entscheidend beschleunigt und das Ergebnis verbessert. Insbesondere beim Ablüften von Wasserlack kann die Zeitersparnis bis zu 70% im Vergleich zu herkömmlichen Anlagen betragen. Zusätzlich ist eine Betriebsarten-Leuchte vorgesehen, die für jede der Betriebsarten eine optische Anzeige in Form einer der gewählten Betriebsart entsprechenden Farbe ergibt und damit die gerade eingeschaltete Betriebsart weithin sichtbar und unverwechselbar angezeigt wird.

Für die Betriebsart "Energiesparen" wird die Luftleistung über die Motordrehzahl, die Heizleistung, der Frisch-, Misch- und Umluftbetrieb, sowie Druck und Temperatur eingestellt und gesteuert.

Bei der Betriebsart "Reinigen" wird die Luftleistung im Frisch-, Misch- und Umluftbetrieb, ferner die zuschaltbare Abblaseinrichtung, und die Lufttemperatur eingestellt.

Bei der Betriebsart "Lackieren" wird die volle Luftmenge, der Frischluft-Betrieb, die Temperatur und die Druckregelung (manuell oder automatisch) gesteuert.

Für "Abluftbetrieb" wird die volle oder reduzierte Luftmenge, die Frischluft, Misch- und Umluft, ferner die zuschaltbare Abblaseinrichtung nach einem entsprechende Prozessparameter berücksichtigenden hinterlegten Programm gesteuert.

Für den "Trocknungsbetrieb" werden Mischluft und Umluftbetrieb, die volle oder reduzierte Luftmenge, die Temperatur, die Zeit sowie das Ein- und Ausschalten der Abblaseinrichtung über hinterlegte Programme mit entsprechenden Prozessparametern gesteuert.

Bei der Betriebsart "Abkühlen" wird der Frisch-, Misch- und Umluftbetrieb, die volle bzw. reduzierte Luftmenge, die Temperatur, die Zeit und die zuschaltbare Abblaseinrichtung durch hinterlegte Programme mit entsprechenden Prozessparametern gesteuert.

Die Dateneingabe erfolgt über das vorbeschriebene Bedienfeld bzw. Bedienpanel, vorzugsweise mit Hilfe von Touch-Screen-Elementen. Die Datenübertragung geschieht über eine Busleitung von einem zentrale Steuergerät zum Hauptschaltschrank an die speicherprogrammierbare Steuerung, die die angeschlossenen Feldgeräte oder Leistungsaggregate mit den Befehlsdaten als Sollwerten speist. Die speicherprogrammierbare Steuerung verarbeitet bzw. vergleicht die ermittelten Istwerte und gibt die erforderlichen Schaltsignale an die Leistungsaggregate. Die Istwerte in Form der Temperatur, des Druckes, der Feuchte und der Prozesse werden am zentralen Steuergerät angezeigt.

Die Wärmerückgewinnung ist bei herkömmlichen Lackieranlagen so ausgelegt, dass sie nur bei der Betriebsart "lackieren" in Funktion tritt, während bei der Betriebsart "Trocknen" bis zu + 70° C warme Luft ungenutzt abgegeben wird. Mit der neuen Wärmerückgewinnungs Einrichtung wird bei der Betriebsart "Trocknen" das Lösemittelrohr vor der Wärmerückgewinnung eingeleitet und eine Rückgewinnung von Energie bezogen auf die 10% Außenluft aus den 10% Fortluft erzielt. Der Wärmerückgewinnungsprozess für die Betriebsarten "Trocknen" und "Lackieren" gemäß der Erfindung ergibt sich aus den beigefügten Zeichnungen.

In Verbindung mit der speicherprogrammierbaren Steuerung sind die Motoren der Ventilatoren der erfindungsgemäßen Vorrichtung mit Frequenzumrichtern ausgestattet. Durch die stufenlose Drehzahlregelung ist eine direkte Antriebsverbindung gewährleistet, wobei die sonst erforderlichen Regelklappen in den Frisch- und Fortluftkanälen entfallen können.

Nachstehend wird die Erfindung in Verbindung mit den Zeichnungen anhand von Ausführungsbeispielen dargestellt. Es zeigt:
- Fig. 1: eine Gesamtansicht der erfindungsgemäßen Lackier- und Trocknungsanlage,
- Fig. 2: eine detalliertere Darstellung der Lackier- und Trocknungsanlage nach Figur 1,
- Fig. 3: eine Darstellung der Wärmerückgewinnung in einer Anlage nach Figur 1 bei der Betriebsart "Trocknen",
- Fig. 4: eine Darstellung der Wärmerückgewinnung in einer Anlage nach Figur 1 bei der Betriebsart "Lackieren",
- Fig. 5: eine schematische Darstellung der zusätzlichen Belüftung des Kabineninnenraumes mittels Abblaseinrichtung, und
- Fig. 6: einen Ausschnitt aus einer Längsansicht der Darstellung nach Figur 5.

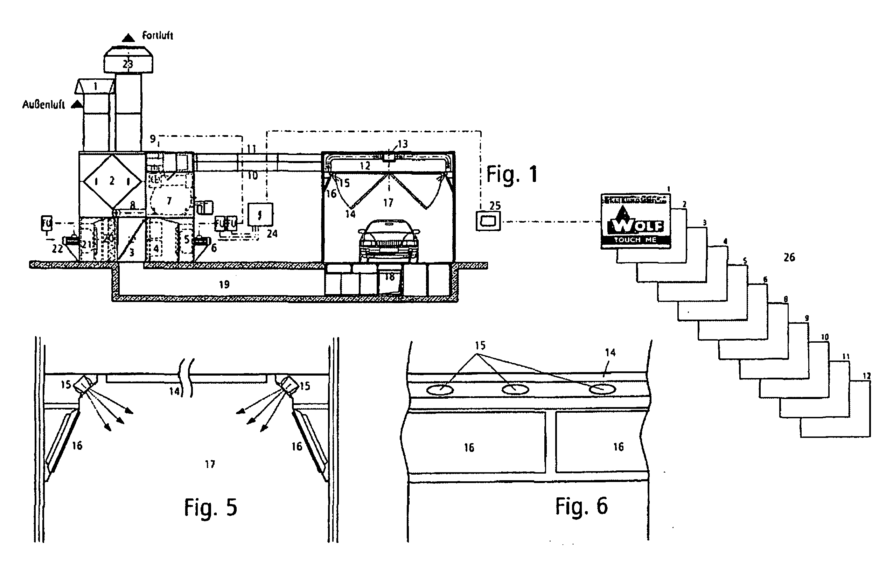

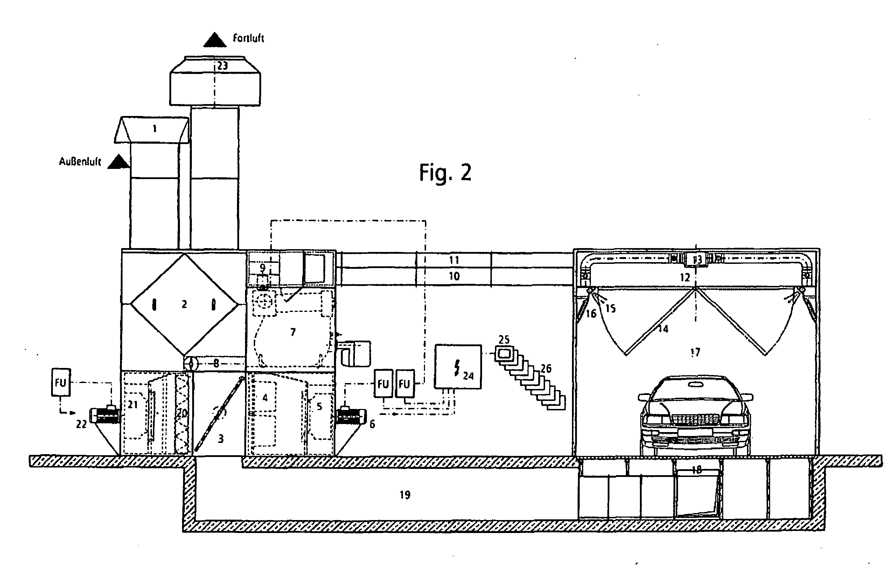

Fig. 1 zeigt eine Gesamtansicht einer Lackieranlage nach der Erfindung mit Ablüftautomatik mit Programmauswahl, mit Ablösesystem und mit Wärmerückgewinnung bei Lackier- und Trockenbetrieb, Fig. 2 ist eine gegenüber Fig. 1 detailliertere Darstellung. Über eine Außenlufthaube 1 gelangt Außenluft durch die Wärmerückgewinnungseinrichtung 2 an eine Umschaltklappe 3, in der der Luftstrom zwischen Lackierbetrieb und Trockenbetrieb umgeschaltet wird. Durch ein Vorfilter 4 wird der Luftstrom, gesteuert über einen Zuluftventilator 5 mit Zuluftmotor 6, über einen Wärmetauscher 7 einem Zuluftgerät "Multi-Air" 9, das außen an der Ausblashaube angeordnet ist und mit einem Lösungsmittelrohr 8 in Verbindung steht, geführt. Vom Zuluftgerät 9 wird der Luftstrom durch einen Zuluftkanal 10 und einen Zuluftkanal "Multi-Air" 11 in den Druckraum 12 über dem Lackierraum 17 und den Verteilkanal 13, die Deckenfiltereinrichtung 14 und Ausblasdüsen 15 im Bereich der an den Seitenwänden der Kabine angeordneten Lampenröhren der Beleuchtung 16 in den Lackierraum 17 gerichtet. Vom Zuluftkanal 10 gehen Kanalverzweigungen aus, die die Zuluft in verschiedene Zonen führen. Der Druckraum 12, in den der Zuluftkanal 11 mündet, wird von der Filterdecke 14 und den Lampenkästen der Beleuchtung 16 gebildet. Dieser Raum nimmt die Ausblasdüsen 15 auf, die die Luftstrahlen 15a in den Lackierraum 17 gerichtet abgeben.

Der Farbnebel im Lackierraum 17 wird über den Farbnebelabscheider 18 am Kabinenboden aufgenommen und die Abluft über den Rückführkanal 19 durch den Vorfilter 20 mit Hilfe des Fortluftventilators 21, der von dem Fortluftmotor 22 angetrieben wird, aus dem Fortluftdeflektor 23 in das Freie abgeleitet. Die Steuerung der gesamten Anlage erfolgt über den Schaltschrank 24, die Betätigung über das Bedientableau 25 und die einzelnen Bedienebenen 26.

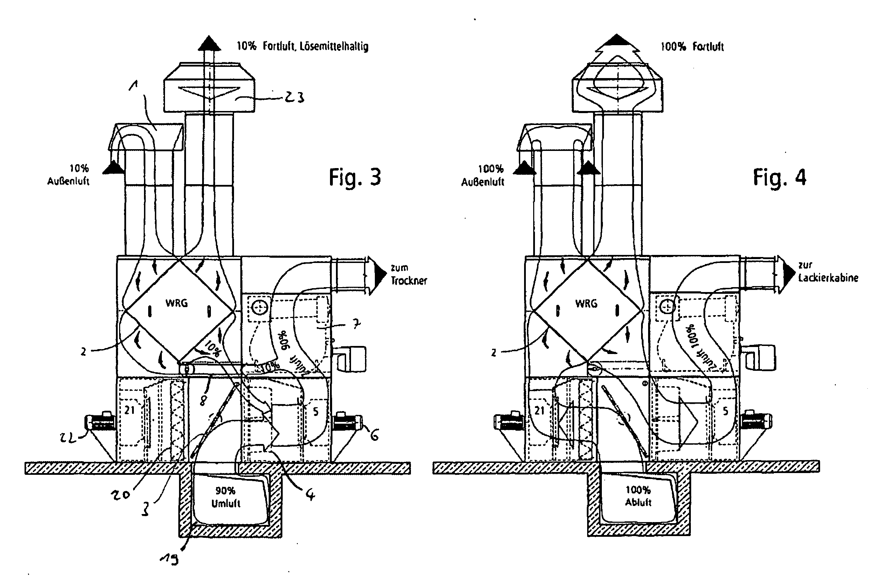

In Fig. 3 ist die Luftführung bei der Betriebsart "Trocknen" dargestellt. Der Ventilator 5 fördert 100% Luftmenge bestehend aus z.B. 90% Umluft und z.B. 10% vorgewärmter Außenluft durch die Wärmerückgewinnungsvorrichtung 2. 10% der Zuluft wird über das Lösemittelrohr 8 über die Wärmerückgewinnungseinrichtung 2 in das Freie gedrückt. Dabei wird die Luft in der Wärmerückgewinnungseinrichtung abgekühlt und gleichzeitig die 10% Außenluft erwärmt. 90% der Zuluft wird in den Trockner gefördert, Die 10% Lösemittel enthaltende Fortluft wird durch den Deflektor 23 abgeleitet.

Die Luftführung bei der Betriebsart "Lackieren" ist in Fig. 4 dargestellt. Hierbei saugt der Zuluftventilator 5 100% Außenluft an, die zu 100% über die Wärmerückgewinnungseinrichtung erwärmt sowie durch den Wärmeaustauscher nacherwärmt in den. Lackierraum eingeführt wird. Der Fortluftventilator 21 saugt 100% Abluft aus dem Lakkierraum ab und drückt diese über die Wärmerückgewinnungseinrichtung in das Freie. In der Wärmerückgewinnungseinrichtung wird die Fortluft abgekühlt und gleichzeitig die Außenluft erwärmt.

### Bezugszeichenliste

- 1: Außenlufthaube
- 2: Wärmerückgewinnung
- 3: Umschaltklappe Lackieren/Trocknen
- 4: Vorfilter
- 5: Zuluftventilator
- 6: Zuluftmotor
- 7: Wärmetauscher
- 8: Lösemittelrohr
- 9: Zuluftgerät; Abblaseinrichtung, außen an Ausblashaube angeordnet
- 10: Zuluftkanal
- 11: Zuluftkanal; Abblaseinrichtung
- 12: Druckraum
- 13: Verteilkanalabblaseinrichtung
- 14: Deckenfilter
- 15: Ausblasdüsen, Abblaseinrichtung
- 16: Beleuchtung
- 17: Lackierraum
- 18: Farbnebelabscheider
- 19: Rückluftkanal
- 20: Vorfilter
- 21: Fortluftventilator
- 22: Fortluftmotor
- 23: Fortluftdeflektor
- 24: Schaltschrank
- 25: Bedientableau (Touch-Screen)
- 26: Bedienebenen

## Patentansprüche

1. Vorrichtung für Lackier- und Trocknungsanlagen, Farbspritzanlagen zum Lacktrocknen von Fahrzeugen und Fahrzeugteilen, sowohl zum Trocknen von Wasserlacken als auch von konventionellen Lacken, mit einem geschlossenen Kabinengehäuse und einer Filterdecke, durch die hindurch Luft über den Deckenquerschnitt verteilt gegen das Fahrzeug gerichtet und am Kabinenboden abgesaugt wird, **dadurch gekennzeichnet, dass**
a) eine Abblaseinrichtung für Lacke aller Art zwischen Filterdecke und Beleuchtung versenkt in die Kabinenwand eingebaut ist, in Strahlrichtung individuell einstellbar ist, und in regelmäßigem Abstand voneinander angeordnete Luftdüsen aufweist,
b) die Abblaseinrichtung über ein Bedienpanel steuerbar ist, an dem die Betriebsarten des Systems, nämlich "Reinigen", "Ablüften", "Trocknen" und "Abkühlen" über Tasten bzw. Knöpfe mit "Touch-Screen"-Funktion einstellbar sind,
c) für weitere Betriebsarten "Energiesparen" und "Reinigen" zusätzliche Tasten/Knöpfe mit "Touch-Screen"-Bedienung vorgesehen sind, und
d) eine Lichtsäule vorgesehen ist, die mittels übereinander oder nebeneinander angeordneter Leuchtelemente an der Kabine die jeweilige Betriebsart in unterschiedlicher Farbe der aufleuchtenden Lampen optisch sichtbar anzeigt.

2. Vorrichtung nach Anspruch 1, **dadurch gekennzeichnet, dass** die Vorrichtung über das Bedienpanel bzw. die Steueranlage on-line mit einem Firmen-Beratungs-Service verbunden ist.

3. Vorrichtung nach Anspruch 1, **dadurch gekennzeichnet, dass** zusätzlich zu der für den Lackierbetrieb eingesetzten Wärmerückgewinnung eine speziell für den Trocknungsbetrieb ausgelegte Wärmerückgewinnungs-Vorrichtung vorgesehen ist.

4. Vorrichtung nach Anspruch 1, **dadurch gekennzeichnet, dass** durch Wahl der Betriebsart "Energiesparen" die Lüfterleistung durch Einstellung der Motordrehzahl, die Heizleistung, der Frisch-, Misch- und Umluftbetrieb, sowie Druck und Temperatur steuerbar sind.

5. Vorrichtung nach Anspruch 1, **dadurch gekennzeichnet, dass** durch Wahl der Betriebsart "Reinigen" die Lüftersteuerung im Frisch-, Misch- und Umluftbetrieb, ferner eine zuschaltbare Luftführungseinrichtung und die Temperatur einstellbar sind.

6. Vorrichtung nach Anspruch 1, **dadurch gekennzeichnet, dass** durch Wahl der Betriebsart "Lackieren" die Luftmenge, der Frischluftbetrieb, die Temperatur und die Druckregelung, wahlweise manuell oder automatisch, einstellbar sind.

7. Vorrichtung nach Anspruch 1, **dadurch gekennzeichnet, dass** durch Wahl der Betriebsart "Ablüften" die volle oder reduzierte Luftmenge, die Zuluft-, Misch- und Umluftmenge, die zuschaltbare Belüftungseinrichtung mit beliebigen Programmen und entsprechenden Prozessparametern einstellbar ist.

8. Vorrichtung nach Anspruch 1, **dadurch gekennzeichnet, dass** durch Wahl der Betriebsart "Trocknen" der Misch- und Umluftbetrieb, die volle oder reduzierte Luftmenge, die Temperatur, die Zeit und die zusätzliche Belüftungsvorrichtung, jeweils mit hinterlegten Programmen und entsprechenden Prozessparametern steuerbar sind.

9. Vorrichtung nach Anspruch 1, **dadurch gekennzeichnet, dass** durch die Wahl der Betriebsart "Abkühlen" der Frisch, Misch und Umluftbetrieb, die volle oder reduzierte Luftmenge, die Temperatur, die Zeit und die zusätzliche Belüftungsvorrichtung, jeweils mit hinterlegten Programmen und entsprechenden Prozessparametern steuerbar sind.

10. Vorrichtung nach einem der vorausgehenden Ansprüche, **dadurch gekennzeichnet, dass** die Antriebsmotoren der Ventilatoren mit Frequenzumrichtern gesteuert werden und mit stufenloser Drehzahlregulierung arbeiten.

11. Vorrichtung nach einem der Ansprüche 1 - 10**, dadurch gekennzeichnet, dass** in der Betriebsart "Trocknen" die Luftführung so ausgelegt ist, dass der Ventilator (5) eine 100%ige Luftmenge fördert, die sich aus 90% Umluft und aus 10% durch die Wärmerückgewinnungseinrichtung (2) vorgewärmter Außenluft zusammensetzt, dass 10% der Zuluft über das Lösemittelrohr (8) über die Wärmerückgewinnungseinrichtung ins Freie gedrückt wird und dabei die Luft in der Rückgewinnungseinrichtung abgekühlt und gleichzeitig die 10% Außenluft erwärmt wird, und dass 90% der Zuluft in den Trockner gefördert wird.

12. Vorrichtung nach einem der Ansprüche 1 - 10, **dadurch gekennzeichnet, dass** in der Betriebsart "Lackieren" die Luftmenge so ausgelegt ist, dass der Zuluftventilator (5) 100% Außenluft ansaugt und 100% Luft über die Wärmerückgewinnungseinrichtung (2) erwärmt sowie im Wärmeaustauscher nacherwärmt in den Lackierraum eingeführt wird, und dass der Fortluftventilator (21) 100% Abluft aus dem Lackierraum saugt und diese über die Wärmerückgewinnungsvorrichtung (2) in das Freie drückt, wo die Fortluft abgekühlt und gleichzeitig die Außenluft erwärmt wird.
